# EUROPÄISCHE PATENTANMELDUNG

(11) **EP 4 556 412 A1**
(43) Veröffentlichungstag der Anmeldung: **21.05.2025**
(21) Anmeldenummer: 24208937.3
(22) Anmeldetag: 25.10.2024
(51) Int. Cl.: B65G 43/02, G05B 23/02, B65G 47/96, B65G 54/02

(54) **VERFAHREN UND MITTEL ZUM ÜBERWACHEN EINER FÖRDERVORRICHTUNG**

(30) Priorität: 16.11.2023 DE 102023132004
(71) Anmelder: Deutsche Post AG, 53113 Bonn (DE)
(72) Erfinder: Breidung, Stefan, 04105 Leipzig (DE)
(74) Vertreter: Michalski Hüttermann & Partner Patentanwälte mbB

(57) **Zusammenfassung**

Gegenstand der Erfindung ist ein computerimplementiertes Verfahren zum Überwachen einer Fördervorrichtung (12), wobei die Fördervorrichtung (12) mehrere Elemente (20) umfasst und derart ausgestaltet ist, dass die mehreren Elemente (20) entlang einer Förderrichtung (22) der Fördervorrichtung (12) bewegbar sind, umfassend die Schritte
- Empfangen eines ersten Signals, wobei das erste Signal beim Betrieb, und insbesondere Regelbetrieb, der Fördervorrichtung (12) erzeugten Schall repräsentiert,
- Empfangen eines zweiten Signals, wobei das zweite Signal einen Zeitpunkt eines Durchganges eines Elementes (20) der Fördervorrichtung (12) an einer Lichtschranke (18) repräsentiert,
- Zuordnen des empfangenen ersten Signals zu Elementen (20) der Fördervorrichtung (12) unter Berücksichtigung des empfangenen zweiten Signals, und
- Überwachen der Fördervorrichtung (12) durch Analysieren des zugeordneten ersten Signals.

Weiterhin betrifft die Erfindung eine Vorrichtung (14) zur Datenverarbeitung umfassend Mittel zur Ausführung des obigen Verfahrens.

Zudem betrifft die Erfindung ein System (10) umfassend ein Fördervorrichtung (12), die obige Vorrichtung (14) zur Datenverarbeitung, wenigstens ein Mikrophon (16) und wenigstens eine Lichtschranke (18).

## Beschreibung

### Technisches Gebiet

Die Erfindung betrifft ein computerimplementiertes Verfahren zum Überwachen einer Fördervorrichtung.

Weiterhin betrifft die Erfindung eine Vorrichtung zur Datenverarbeitung umfassend Mittel zur Ausführung des obigen Verfahrens, ein Computerprogrammprodukt, umfassend Befehle, die bei der Ausführung des Programms durch einen Computer diesen veranlassen, das obige Verfahren auszuführen, und einen computerlesbaren Datenträger, auf dem das obige Computerprogrammprodukt gespeichert ist.

Ferner betrifft die Erfindung ein System umfassend eine Fördervorrichtung und die obige Vorrichtung zur Datenverarbeitung.

### Hintergrund der Erfindung

Fördervorrichtungen und insbesondere Sorter als logistische Sortier- und Verteilsysteme zum Transportieren und/oder Sortieren von Objekten, insbesondere Stückgüter, sind im Stand der Technik bekannt. Infolge von E-Commerce und Online-Versandhandelsangeboten hat sich die Anzahl von zu transportierender und/oder sortierende Stückgüter signifikant erhöht. Entsprechend wichtig ist die Zuverlässigkeit der Fördervorrichtungen, da technische Probleme jeweils das Risiko eines ungeplanten Stillstands der Fördervorrichtung bergen. Dies ist mit hohen Verzögerungen, Kapazitätseinschränkungen und Kosten verbunden.

Entsprechend besteht Bedarf an Mitteln zur Überwachung der Fördervorrichtung, um frühzeitig auf mögliche Probleme aufmerksam gemacht zu werden. Besonderer Bedarf besteht an solchen Mitteln zur Überwachung, die sehr frühzeitig zukünftige und eventuell schwerer werdende Fehler erkennen, so dass die Möglichkeit besteht, Gegenmaßnahmen einzuleiten, die einen Stillstand der Fördervorrichtung vermeiden. Nachteilig an bekannten Überwachungssystemen ist zudem unter anderem, dass diese lediglich in der Lage sind, das Vorhandensein einer möglichen Fehlfunktion festzustellen, allerdings keine Zuordnung des Fehlers zu einzelnen Bauteilen der Fördervorrichtungen ermöglichen. Entsprechend aufwändig ist die daran anschließende Fehlersuche.

### Beschreibung der Erfindung

Ausgehend von dieser Situation ist es eine Aufgabe der vorliegenden Erfindung, die Überwachung von Fördervorrichtungen zu verbessern und insbesondere eine Zuordnung eines potentiell zukünftig auftretenden Fehlers zu einem spezifischen Bauteil der Fördervorrichtung ermöglichen.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch ein computerimplementiertes Verfahren zum Überwachen einer Fördervorrichtung gelöst, wobei die Fördervorrichtung mehrere Elemente umfasst und derart ausgestaltet ist, dass die mehreren Elemente entlang einer Förderrichtung der Fördervorrichtung bewegbar sind, umfassend die Schritte:
- Empfangen eines ersten Signals, wobei das erste Signal beim Betrieb, und insbesondere Regelbetrieb, der Fördervorrichtung erzeugten Schall repräsentiert,
- Empfangen eines zweiten Signals, wobei das zweite Signal einen Zeitpunkt eines Durchganges eines Elementes der Fördervorrichtung an einer Lichtschranke repräsentiert,
- Zuordnen des empfangenen ersten Signals zu Elementen der Fördervorrichtung unter Berücksichtigung des empfangenen zweiten Signals, und
- Überwachen der Fördervorrichtung durch Analysieren des zugeordneten ersten Signals.

Weiterhin wird die Aufgabe durch eine Vorrichtung zur Datenverarbeitung umfassend Mittel zur Ausführung des obigen Verfahrens gelöst.

Ferner wird die Aufgabe durch ein Computerprogrammprodukt, umfassend Befehle, die bei der Ausführung des Programms durch einen Computer diesen veranlassen, das obige Verfahren auszuführen, gelöst.

Weiterhin wird die Aufgabe durch einen computerlesbaren Datenträger, auf dem das obige Computerprogrammprodukt gespeichert ist, gelöst.

Ferner wird die Aufgabe durch ein System umfassend eine Fördervorrichtung, die obige Vorrichtung zur Datenverarbeitung, wenigstens ein Mikrophon und wenigstens eine Lichtschranke gelöst, wobei die Fördervorrichtung mehrere Elemente umfasst und derart ausgestaltet ist, dass die mehreren Elemente entlang einer Förderrichtung der Fördervorrichtung bewegbar sind, wobei das Mikrophon dazu ausgestaltet ist, ein erstes Signal auf Grundlage von Schall zu erzeugen, wobei die Lichtschranke eine Lichtquelle und einen Lichtsensor umfasst und dazu ausgestaltet ist, ein zweites Signal auf Grundlage von optischen Signalen zu erzeugen, und wobei das Mikrophon und die Lichtschranke kommunikativ mit der Vorrichtung zur Datenverarbeitung in Verbindung stehen, derart dass das erste und zweite Signal von der Vorrichtung zur Datenverarbeitung empfangbar sind.

Ein Aspekt der Erfindung ist, dass durch Empfangen des zweiten Signals, das den Durchgang eines Elementes der Fördervorrichtung an der Lichtschranke repräsentiert, eine Zuordnung des ersten den Schall repräsentierenden Signals zu einzelnen Elementen der Fördervorrichtung erfolgt. In anderen Worten erfüllt das zweite Signal die Funktion eines Zeitstempels für den Durchgang eines Elementes an der Lichtschranke. In noch anderen Worten formuliert erfolgt also bevorzugt eine zeitliche Zuordnung zwischen dem zweiten und dem ersten Signal. Dies ermöglicht, dass in der nachfolgenden Analyse des ersten Signals nicht lediglich das Vorhandensein eines Fehlers oder zukünftigen potentiellen Fehlers feststellbar ist, sondern auch, dass dieser Fehler einem spezifischen Element der Fördervorrichtung als Fehlerquelle zugewiesen wird. Entsprechend kann eine gezielte Wartung der Fördervorrichtung und insbesondere eine frühzeitige Wartung des als Fehlerquelle identifizierten Elementes der Fördervorrichtung erfolgen.

Im ersten Schritt des computerimplementierten Verfahrens wird also das erste Signal empfangen. Bevorzugt repräsentiert das erste Signal ein beim Betrieb und insbesondere Regelbetrieb der Fördervorrichtung erzeugter Schall. In anderen Worten wird bevorzugt eine zeitkontinuierliche durch den Betrieb der Fördervorrichtung erzeugte physikalische Größe, insbesondere der Schalldruck, durch das erste Signal dargestellt. Bevorzugt ist das erste Signal ein Digitalsignal und weiter bevorzugt ein zeitdiskretes Digitalsignal, welches im ersten Schritt von der Vorrichtung zur Datenverarbeitung zur weiteren Auswertung empfangen wird. Das Digitalsignal kann durch Konvertierung aus einem analogen Audiosignal hervorgegangen sein.

Im zweiten Schritt des Verfahrens wird das zweite Signal empfangen. Das zweite Signal repräsentiert bevorzugt einen Zeitpunkt eines Durchganges eines Elementes der Fördervorrichtung an der Lichtschranke. Das zweite Signal ist bevorzug ein zeitdiskretes Signal und insbesondere ein Digitalsignal. In anderen Worten wird also bevorzugt ein durch die Bewegung der Elemente entlang der Förderrichtung an der Lichtschranke erzeugtes optisches Signal in ein Digitalsignal umgewandelt, welches dann im zweiten Schritt zur weiteren Auswertung von der Vorrichtung zur Datenverarbeitung empfangen wird.

Nachdem durch Berücksichtigung des zweiten Signals das erste Signal zu Elementen der Fördervorrichtung zugeordnet wurde, findet anschließend die Überwachung der Fördervorrichtung durch Analysieren des zugeordneten ersten Signals statt. Besonders bevorzugt umfasst das Berücksichtigen des zweiten Signals eine Zuordnung des ersten und zweiten Signales zueinander über den Zeitpunkt der beiden Signale.

Gemäß einer bevorzugten Weiterbildung der Erfindung ist vorgesehen, dass das Überwachen der Fördervorrichtung ein Identifizieren eines irregulären Elementes der Fördervorrichtung umfasst. Unter einem irregulären Element ist bevorzugt ein Element zu verstehen, das in seiner Funktion von der Norm abweicht. Dabei muss ein irreguläres Element noch nicht zwingend zu einem Ausfall der Funktion der Fördervorrichtung führen. In der Regel erhöht aber das Vorhandensein eines irregulären Elementes die Wahrscheinlichkeit, dass ein solcher Ausfall der Fördervorrichtung in der Zukunft stattfindet. Das Erkennen von irregulären Elementen ermöglicht also eine vorausschauende Wartung der Fördervorrichtung, bei der die Fördervorrichtung prädiktiv instandgehalten werden kann. Dies ermöglicht eine Kosteneinsparungen gegenüber routinemäßigen oder zeitbasierten vorbeugenden Instandhaltungsstrategien, da eine Wartung nur dann ausgeführt werden muss, wenn dies durch das Vorhandensein eines irregulären Elementes auch gerechtfertigt ist.

Besonders bevorzugt ist gemäß einer weiteren Weiterbildung der Erfindung vorgesehen, dass das Überwachen der Fördervorrichtung mittels maschinellen Lernens und/oder statistischen Verfahren erfolgt. Dies ermöglicht es, spezifisch auf die Fördervorrichtung und ihre Umgebung abgestimmt die irregulären Elemente zuverlässig zu erkennen. Die statistischen Verfahren verwenden zur Überwachung bevorzugt dynamische und/oder rollierende statistische Erhebungen.

Gemäß einer bevorzugten Weiterbildung der Erfindung ist vorgesehen, dass das erste empfangene Signal Amplitudenwerte zu aufeinanderfolgenden Zeitpunkten umfasst. Weiter bevorzugt ist vorgesehen, dass das Verfahren den Schritt Ermitteln von in dem ersten Signal enthaltene Frequenzen umfasst. In anderen Worten wird also bevorzugt das Spektrum des ersten Signals bestimmt, besonders bevorzugt wird das Spektrum in zeitlich aufeinanderfolgenden Signalabschnitten des ersten Signals bestimmt. Derart lässt sich ermitteln zu welchem Anteil die Frequenzen im zeitlichen Verlauf im ersten Signal enthalten sind. Dies ermöglicht durch Analyse der Amplitudenwerte bei den jeweiligen Frequenzen und/oder in vordefinierten Frequenzbereichen irreguläre Elemente der Fördervorrichtung zu erkennen. Insbesondere wurde festgestellt, dass irreguläre Elemente der Fördervorrichtung höhere Amplitudenwerte in bestimmten Frequenzbereichen aufweisen.

Gemäß einer bevorzugten Weiterbildung der Erfindung ist vorgesehen, dass durch den Schritt des Zuordnens des empfangenen ersten Signals zu Elementen der Fördervorrichtung unter Berücksichtigung des empfangenen zweiten Signals Amplitudenwerte bei mehreren Frequenzen und mehreren Zeitpunkten für jedes Element der Fördervorrichtung erhalten werden. Bevorzugt findet also eine elementbezogene Analyse des ersten Signals statt.

Gemäß einer weiteren bevorzugten Weiterbildung der Erfindung ist vorgesehen, dass der Schritt des Zuordnens des empfangenen ersten Signals zu Elementen der Fördervorrichtung unter Berücksichtigung des empfangenen zweiten Signals ein Berücksichtigen einer Fördergeschwindigkeit der Fördervorrichtung, einer Länge der Fördervorrichtung entlang der Förderrichtung und/oder einer Anzahl an Elementen der Fördervorrichtung umfasst. Insbesondere kann mittels der Fördergeschwindigkeit, mittels der Länge eines bevorzugt als Rundkurs ausgestaltete Fördervorrichtung und/oder mittels der Anzahl an Elementen eine genaue Zuordnung des ersten Signals zu den jeweiligen Elementen der Fördervorrichtung erfolgen.

Gemäß einer weiteren bevorzugten Weiterbildung der Erfindung ist vorgesehen, dass das Verfahren den Schritt Überprüfen des empfangenen ersten Signals unter Berücksichtigung des empfangenen zweiten Signals und Verwerfen des empfangenen ersten Signals umfasst, für den Fall, dass das empfangene erste Signal in der Zeitachse nicht regelmäßig ist. Um auszuschließen, dass eine schlechte Qualität des ersten Signals zu einer falschen Schlussfolgerung im Hinblick auf das Erkennen von irregulären Elementen führt, ist in anderen Worten bevorzugt vorgesehen, dass das erste Signal im Hinblick auf seine Regelmäßigkeit in der Zeitachse überprüft wird. Besonders bevorzugt findet dieses Überprüfen unter Berücksichtigung von Vergleichsdaten mittels maschinellen Lernens und/oder statistischer Verfahren statt. In Bezug zu maschinellem Lernen ist besonders bevorzugt vorgesehen, dass ein Algorithmus auf Basis der Vergleichsdaten ein Modell erzeugt, um regelmäßige von unregelmäßigen ersten Signalen zu unterscheiden. Über die bereits erfassten und dann bekannten Fehler ist es dem Algorithmus somit auch möglich, Fehlertypen zu erkennen und eine automatisierte Fehlerklassifizierung vorzunehmen.

In Bezug zum Überwachen ist gemäß einer weiteren bevorzugten Weiterbildung der Erfindung vorgesehen, dass das Überwachen der Fördervorrichtung ein Vergleichen eines Amplitudenwertes in einem Frequenzband mit einem Grenzwert umfasst. Bevorzugt ist der Grenzwert ein frequenzbandabhängiger Grenzwert. Weiter bevorzugt ist vorgesehen, dass das Überwachen der Fördervorrichtung ein Vergleichen der Amplitudenwerte in allen Frequenzbändern mit den frequenzbandabhängigen Grenzwerten umfasst. Besonders bevorzugt wird der Grenzwert und/oder die frequenzbandabhängigen Grenzwerte unter Berücksichtigung von Vergleichsdaten unter Verwendung von dynamischen und/oder rollierenden statistischen Erhebungen ermittelt. Alternativ oder zusätzlich kann vorgesehen sein, den Grenzwert und/oder die frequenzabhängigen Grenzwerte mittels maschinellen Lernens zu ermitteln.

Gemäß einer weiteren bevorzugten Weiterbildung ist in diesem Zusammenhang bevorzugt vorgesehen, dass der Grenzwert ein elementabhängiger Grenzwert ist. Insbesondere wenn die Fördervorrichtung zueinander unterschiedlich ausgestaltet Elemente aufweist, beispielsweise Elemente mit eigenem Antrieb und/oder Elemente mit Bürsten sind aufgrund der Konfiguration der einzelnen Elemente manche der Elemente lauter als andere Elemente. Entsprechend ist es vorteilhaft, dass der Grenzwert ein elementabhängiger Grenzwert ist, da derart bei der Auswertung unterschiedlichen Elemente unterschiedlich betrachtet werden können und beispielsweise generell lautere Elemente separat ausgewertet werden können.

Weiterhin ist gemäß einer bevorzugten Weiterbildung der Erfindung vorgesehen, dass das Verfahren den Schritt Generieren einer Warnung und/oder eines Alarmes beim Überschreiten des Grenzwertes in einem spezifischen Frequenzband und/oder beim Überschreiten des Grenzwertes in mehreren Frequenzbändern umfasst. Dies ermöglicht eine effiziente Wartung der Fördervorrichtung. Bevorzugt werden Warnungen für Elemente generiert, die höhere Amplitudenwerte als der Grenzwert aufweisen, während Alarme für Elemente ausgelöst werden, deren Amplitudenwerte sich innerhalb eines vordefinierten Zeitraumes mehrfach dem Grenzwert für den Frequenzbereich nähern.

Gemäß einer weiteren bevorzugten Weiterbildung der Erfindung ist in diesem Zusammenhang vorgesehen, dass das Überwachen der Fördervorrichtung ein Vergleichen eines Amplitudenwertes mit einem Grenzwert über mehrere Umläufe der Fördervorrichtung umfasst. Dies hat den Vorteil, dass einmalige Effekte, wie beispielsweise ein Hintergrundgeräusch mit hoher Amplitude und/oder Störgeräusche durch ungenügend verpackte Stückgüter nicht direkt dazu führen, dass eine Warnung und/oder ein Alarm generiert wird, da diese nicht über mehrere Umläufe der Fördervorrichtung bestehen. Bevorzugt wird also nur dann eine Warnung und/oder ein Alarm generiert, wenn bei einer vordefinierten Anzahl von Umläufen aus einer Mehrzahl an Umläufen der Grenzwert überschritten ist. In anderen Worten kann eine Warnung und/oder ein Alarm also erst generiert werden, wenn eine erhöhte Amplitude über mehrere Umläufe der Fördervorrichtung andauert. Alternativ kann auch vorgesehen sein, dass das Überwachen der Fördervorrichtung ein Bilden eines Amplituden-Mittelwertes über mehreren Amplitudenwerte umfasst und der Amplituden-Mittelwert mit dem Grenzwert verglichen wird. Das Verfahren ist somit besonders geeignet im Regelbetrieb der Fördervorrichtung eine Überwachung zu ermöglichen, da es in der Lage ist, erste Signale, die den Schall von defekten Elementen repräsentieren von ersten Signalen, die den Schall von einmaligen Effekten repräsentieren - wie beispielsweise der Transport eines besonders schweren Stückgutes auf der Fördervorrichtung - zu unterscheiden. In anderen Worten erfolgt also bevorzugt das Überwachen der Fördervorrichtung derart, dass zugeordnete erste Signale, die auf irreguläre Elemente der Fördervorrichtung zurückzuführen sind, von zugeordneten ersten Signalen, die auf irregulär auf der Fördervorrichtung angeordnete Stückgüter und/oder die auf von der Norm abweichende Stückgüter zurückzuführen sind, voneinander unterscheidbar sind.

Weitere technische Merkmale und Vorteile des Verfahrens zum Überwachen der Fördervorrichtung ergeben sich für den Fachmann durch die nachfolgende Beschreibung der Vorrichtung zur Datenverarbeitung, des Computerprogrammproduktes, des computerlesbaren Datenträgers und des Systems.

Wie bereits erwähnt betrifft die Erfindung auch eine Vorrichtung zur Datenverarbeitung umfassend Mittel zur Ausführung des oben beschriebenen Verfahrens. Besonders bevorzugt ist die Vorrichtung zur Datenverarbeitung serverbasiert. Die Vorrichtung zur Datenverarbeitung umfasst bevorzugt Mittel zum Empfangen des ersten und/oder zweiten Signals. Weiter bevorzugt umfasst die Vorrichtung zur Datenverarbeitung wenigstens einen Speicher zum Speichern des ersten Signals und/oder des zweiten Signals und/oder ein programmierbares Rechenwerk.

Weiterhin betrifft die Erfindung das Computerprogrammprodukt, umfassend Befehle, die bei der Ausführung des Programms durch einen Computer diesen veranlassen, das obige Verfahren auszuführen. Zudem betrifft die Erfindung den computerlesbaren Datenträger, auf dem das oben beschriebene Computerprogrammprodukt gespeichert ist.

Dem Fachmann ergründen sich die technischen Effekte und Vorteile der Vorrichtung zur Datenverarbeitung, des Computerprogrammproduktes und/oder des computerlesbaren Datenträgers durch die obige Beschreibung des computerimplementierten Verfahrens zum Überwachen der Fördervorrichtung sowie durch die nachfolgende Beschreibung des Systems umfassend die Fördervorrichtung und die Vorrichtung zur Datenverarbeitung.

Wie bereits erwähnt wird die Aufgabe der Erfindung auch durch das System umfassend die Fördervorrichtung, die oben beschriebene Vorrichtung zur Datenverarbeitung, wenigstens ein Mikrophon und wenigstens eine Lichtschranke gelöst, wobei die Fördervorrichtung mehrere Elemente umfasst und derart ausgestaltet ist, dass die mehreren Elemente entlang einer Förderrichtung der Fördervorrichtung bewegbar sind, wobei das Mikrophon dazu ausgestaltet ist ein erstes Signal auf Grundlage von Schall zu erzeugen, wobei die Lichtschranke eine Lichtquelle und einen Lichtsensor umfasst und dazu ausgestaltet ist, ein zweites Signal auf Grundlage von optischen Signalen zu erzeugen, und wobei das Mikrophon und die Lichtschranke kommunikativ mit der Vorrichtung zur Datenverarbeitung in Verbindung stehen, derart dass das erste und zweite Signal von der Vorrichtung zur Datenverarbeitung empfangbar sind.

Bevorzugt ist vorgesehen, dass das Mikrophon dazu ausgestaltet ist, den beim Betrieb der Fördervorrichtung erzeugen Schalldruck in der Form des ersten bevorzugt Signals, also bevorzugt in Form eines Digitalsignals darzustellen und an die Vorrichtung zur Datenverarbeitung kommunikativ weiterzuleiten. Weiter bevorzugt ist vorgesehen, dass die Lichtschranke dazu ausgestaltet ist, das optische Signal durch das b bevorzugt digitale zweite Signal darzustellen und an die Vorrichtung zur Datenverarbeitung kommunikativ weiterzuleiten. Die Weiterleitung des ersten und/oder zweiten Signals kann kabellos oder kabelgebunden erfolgen.

Bevorzugt ist die Fördervorrichtung zum Transportieren und/oder Sortieren von Objekten insbesondere Stückgüter ausgestaltet. In diesem Zusammenhang ist gemäß einer bevorzugten Weiterbildung der Erfindung vorgesehen, dass die Fördervorrichtung als Rundkurs ausgestaltet ist und/oder dass die mehreren Elemente synchron entlang der Förderrichtung bewegbar sind und/oder dass die Elemente dazu ausgestaltet sind, auf den Elementen angeordnete Objekt senkrecht zur Förderrichtung zu bewegen.

Die Elemente der Fördervorrichtung können alle gleichartig ausgestaltet sein. Alternativ ist es möglich, dass die Elemente der Fördervorrichtung zueinander unterschiedlich ausgestaltet sind. In anderen Worten kann vorgesehen sein, dass die Fördervorrichtung unterschiedlich ausgestaltete Elemente umfasst - beispielsweise Elemente mit eigenem Antrieb und/oder Elemente mit Bürsten. Besonders bevorzugt umfassen wenigstens einige Elemente der Fördervorrichtung ein Förderband und sind dazu ausgestaltet, auf dem Element angeordnete Objekt senkrecht zur Richtung des Rundkurses zu bewegen.

Gemäß einer weiteren bevorzugten Weiterbildung der Erfindung ist in diesem Zusammenhang vorgesehen, dass die Fördervorrichtung als Quergurtsorter ausgestaltet ist und/oder dass das Element einen Gurtförderer und/oder Bandförderer umfasst. Entsprechend lässt sich sehr einfach das Objekt senkrecht zur Förderrichtung der Fördervorrichtung bewegen.

Grundsätzlich kann das Mikrophon an unterschiedlichen Stellen der Fördervorrichtung angebracht sein, so zum Beispiel an einer geraden Strecke der Fördervorrichtung. In Bezug zur Anordnung des Mikrophons ist gemäß einer weiteren bevorzugten Weiterbildung der Erfindung vorgesehen, dass das Mikrophon derart zur Fördervorrichtung angeordnet ist, dass in einer Kurve der Fördervorrichtung erzeugter Schall im Empfangsbereich des Mikrophons ist und/oder dass das Mikrophon nicht mehr als 1 m von einer Kurve der Fördervorrichtung entfernt und besonders bevorzugt im Kurvenradius der Fördervorrichtung angeordnet ist. Da die Elemente der Fördervorrichtung üblicherweise Hauptlaufräder und Seitenlaufräder aufweisen und insbesondere in Kurven die Seitenlaufräder Kontakt zu weiteren Teilen der Fördervorrichtung haben, ermöglicht die Anordnung des Mikrophons in der Nähe der Kurve, dass auch vom Lauf der Seitenlaufräder erzeugter Schall empfangen wird. Entsprechend erhöht sich durch diese Anordnung die Zuverlässigkeit des Verfahrens zum Überwachen der Fördervorrichtung.

In Zusammenhang mit der Anordnung des Mikrophons ist gemäß einer weiteren bevorzugten Weiterbildung der Erfindung vorgesehen, dass das Mikrophon an einem statischen Bauteil der Fördervorrichtung und/oder unterhalb einer Unterseite der Elemente der Fördervorrichtung angebracht ist. Dies ermöglicht einen besonders guten Empfang vom Schall der Fördervorrichtung und insbesondere durch den Lauf der Hauptlaufräder und/oder Seitenlaufräder erzeugten Schalls.

In Bezug zur Lichtschranke ist bevorzugt vorgesehen, dass der Lichtsensor der Lichtschranke auf Grundlage eines an den Elementen der Fördervorrichtung reflektierten optischen Signals der Lichtquelle das zweite Signal generiert. Derart kann auf genaue Art und Weise den Zeitpunkt des Durchganges eines Elementes der Fördervorrichtung an der Lichtschranke ermittelt werden. Besonders bevorzugt wird durch Reflektion eine Sensitivitätsschwelle des Lichtsensors überschritten, was zur Generierung des zweiten Signals führt.

In diesem Zusammenhang ist gemäß einer weiteren bevorzugten Weiterbildung der Erfindung vorgesehen, dass wenigstens ein Element der Fördervorrichtung mit einem Reflektor ausgestattet ist, und dass bevorzugt die Lichtquelle der Lichtschranke derart zur Fördervorrichtung angeordnet ist, dass ein Lichtstrahl der Lichtquelle bei Durchlauf des Elementes den Reflektor senkrecht trifft. Bevorzugt ist das System dazu ausgestaltet, dass lediglich ein Element der mehreren Elemente der Fördervorrichtung mit einem Reflektor ausgestattet ist. Entsprechend wird durch das Verfahren bevorzugt der Zeitpunkt des Durchganges diese einen Elementes genutzt, um auf Basis der Fördergeschwindigkeit, der Länge der Fördervorrichtung und/oder der Anzahl an Elementen das empfangene erste Signal den Elementen der Fördervorrichtung zuzuordnen. Alternativ können aber auch mehrere Elemente der Fördervorrichtung mit einem Reflektor ausgestattet sein.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigt
- Fig. 1: eine schematische Darstellung eines Systems, gemäß einem bevorzugten Ausführungsbeispiel der Erfindung, und
- Fig. 2: eine schematische Darstellung eines Ausschnittes des in Figur 1 gezeigten Systems.

### Detaillierte Beschreibung des Ausführungsbeispiels

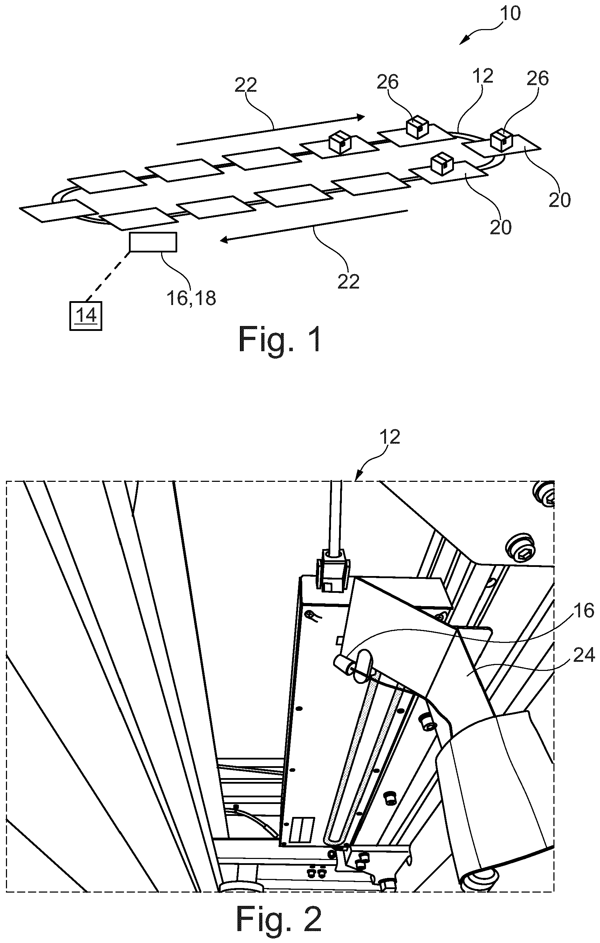

Figur 1 zeigt eine schematische Darstellung eines Systems 10 umfassend ein Fördervorrichtung 12, eine Vorrichtung zur Datenverarbeitung 14, ein Mikrophon 16 und eine Lichtschranke 18, gemäß einem bevorzugten Ausführungsbeispiel der Erfindung.

Die Fördervorrichtung 12 ist vorliegend als Quergurtsorter 12 ausgestaltet und umfasst mehrere Elemente 20, die entlang einer Förderrichtung 22 in einem Rundkurs bewegbar sind. Das Mikrophon 16 ist dazu ausgestaltet, ein erstes Signal auf Grundlage von Schall zu erzeugen. Vorliegend handelt es sich beim ersten Signal um ein Digitalsignal. Die Lichtschranke 18, die eine Lichtquelle und einen Lichtsensor umfasst, ist dazu ausgestaltet, ein zweites Signal auf Grundlage von optischen Signalen zu erzeugen. Vorliegend handelt es sich auch beim zweiten Signal um ein Digitalsignal. Das Mikrophon 16 und die Lichtschranke 18 sind vorliegend direkt vor einer Kurve des Rundkurses der Fördervorrichtung 12 angeordnet.

Das Mikrophon 16 und die Lichtschranke 18, die beide in Figur 1 lediglich schematisch dargestellt sind, sind kommunikativ mit der Vorrichtung zur Datenverarbeitung 14 derart verbunden, dass das erste und zweite Signal von der Vorrichtung zur Datenverarbeitung 14 empfangbar sind.

Figur 2 zeigt eine schematische Darstellung eines Ausschnittes des in Figur 1 gezeigten Systems 10. Insbesondere ist in Figur 2 zu erkennen, dass das Mikrophon 16 an einem statischen Bauteil 24 der Fördervorrichtung 12 angebracht ist. Vorliegend ist das Mikrophon 16 unterhalb einer Unterseite der Elemente 20 der Fördervorrichtung 12 in etwa 50 cm Abstand zu den Elementen 20 angebracht.

Die Vorrichtung zur Datenverarbeitung 14 ist dazu eingerichtet, das nachfolgend beschriebene computerimplementierte Verfahren zum Überwachen der Fördervorrichtung 12 durchzuführen:
In einem Schritt des Verfahrens wird das erste Signal empfangen, wobei das erste Signal beim Regelbetrieb der Fördervorrichtung 12 erzeugten Schall repräsentiert. Dass sich die Fördervorrichtung 12 im vorliegenden Fall im Regelbetrieb befindet, ist in Figur 1 daran ersichtlich, dass auf einigen der Elemente 20 Stückgüter 26 angeordnet sind.

In einem weiteren Schritt des Verfahrens wird das zweite Signal empfangen, wobei das zweite Signal einen Zeitpunkt eines Durchganges eines Elementes 20 der Fördervorrichtung 12 an der Lichtschranke 18 repräsentiert.

In einem den vorherigen Schritten nachfolgenden Schritt wird das empfangene erste Signal den Elementen 20 der Fördervorrichtung 12 unter Berücksichtigung des empfangenen zweiten Signals zugeordnet.

Nachfolgend daran wird in einem weiteren Schritt die Fördervorrichtung 12 durch Analysieren des zugeordneten ersten Signals überwacht.

Im vorliegenden Ausführungsbeispiel weist genau ein Element 20 der Fördervorrichtung 12 einen Reflektor auf, so dass die Lichtschranke 18 den Zeitpunkt des Durchganges dieses einen Elementes 20 an der Lichtschranke 18 erfasst. Mit Hilfe dieses als Zeitstempel fungierenden Zeitpunktes lässt sich das empfangene erste Signal den entsprechenden Elementen 20 der Fördervorrichtung 12 zuordnen.

Entsprechend ergibt sich für jeden Umlauf der Fördervorrichtung 12 eine Reihe an Amplitudenwerten für jedes Element 20. Im vorliegenden Ausführungsbeispiel wird zum Überwachen der Fördervorrichtung 12 eine konfigurierbare Anzahl an historischen Vergleichsdaten berücksichtigt. Der Standardwert für die Anzahl Tage der historischen Vergleichsdaten die berücksichtigt werden, liegt bei 15 Tagen, 7 Tage haben sich als ausreichend erwiesen. Im vorliegenden Ausführungsbeispiel werden die Daten der letzten 15 Tage als historische Vergleichsdaten berücksichtigt. Da vorliegend das empfangene erste Signal unter Berücksichtigung des empfangenen zweiten Signals auf seine Regelmäßigkeit in seiner Zeitachse überprüft wird, und unregelmäßige Signale verworfen werden, führt dies typischerweise bei einer Fördervorrichtung 12, die 1400 Elemente umfasst, bei etwa 60 auswertbaren Umläufen der Fördervorrichtung pro Arbeitstag zu etwa 100.800 Datenreihen mit Amplitudenwerten. Jede Datenreihe mit Amplitudenwerte enthält ungefähr 43 einzelne Amplitudenwerte.

Beim Überwachen der Fördervorrichtung 12 werden im vorliegende Ausführungsbeispiel irregulären Elemente 20 der Fördervorrichtung 12 identifiziert. Dies wird ermöglicht, da festgestellt wurde, dass irreguläre Elemente 20 in einigen Frequenzbereichen höhere Amplituden erzeugen als nicht irreguläre Elemente 20. Wenn also ein Element 20 für einen bestimmten Frequenzbereich höhere Amplituden aufweist als andere Elemente 20 der Fördervorrichtung 12, ist die Wahrscheinlichkeit hoch, dass das Element 20 defekt ist.

In diesem bevorzugten Ausführungsbeispiel werden frequenzbandabhängigen Grenzwerte unter Berücksichtigung der historischen Vergleichsdaten mittels statistischer Verfahren ermittelt. Beim Überwachen der Fördervorrichtung 12 wird dann jeder Frequenzbereich für jedes Element 20 überprüft. Für Elemente 20, die deutlich erhöhte Amplitudenwerte aufweisen, werden Warnungen generiert, für Elemente 20 mit Amplitudenwerten, die sich regelmäßig dem Grenzwert für einen bestimmten Frequenzbereich nähern, werden Alarme ausgelöst. Entsprechend können die als irregulär identifizierten Elemente 20 gezielt gewartet werden.

Das beschriebene Ausführungsbeispiel ist lediglich ein Beispiel, das im Rahmen der Ansprüche auf vielfältige Weise modifiziert und/oder ergänzt werden kann.

**Bezugszeichenliste**

| | |
|---|---|
| System | 10 |
| Fördervorrichtung | 12 |
| Vorrichtung zur Datenverarbeitung | 14 |
| Mikrophon | 16 |
| Lichtschranke | 18 |
| Element | 20 |
| Förderrichtung | 22 |
| Statisches Bauteil | 24 |
| Stückgut | 26 |

## Patentansprüche

1. Computerimplementiertes Verfahren zum Überwachen einer Fördervorrichtung (12), wobei die Fördervorrichtung (12) mehrere Elemente (20) umfasst und derart ausgestaltet ist, dass die mehreren Elemente (20) entlang einer Förderrichtung (22) der Fördervorrichtung (12) bewegbar sind, umfassend die Schritte:
- Empfangen eines ersten Signals, wobei das erste Signal beim Betrieb, und insbesondere Regelbetrieb, der Fördervorrichtung (12) erzeugten Schall repräsentiert,
- Empfangen eines zweiten Signals, wobei das zweite Signal einen Zeitpunkt eines Durchganges eines Elementes (20) der Fördervorrichtung (12) an einer Lichtschranke (18) repräsentiert,
- Zuordnen des empfangenen ersten Signals zu Elementen (20) der Fördervorrichtung (12) unter Berücksichtigung des empfangenen zweiten Signals, und
- Überwachen der Fördervorrichtung (12) durch Analysieren des zugeordneten ersten Signals.

2. Verfahren nach dem vorhergehenden Anspruch, wobei das Überwachen der Fördervorrichtung (12) ein Identifizieren eines irregulären Elementes (20) der Fördervorrichtung (12) umfasst, und/oder wobei das Überwachen der Fördervorrichtung (12) mittels maschinellen Lernens und/oder statistischer Verfahren erfolgt.

3. Verfahren nach einem der vorhergehenden Ansprüche, wobei das erste empfangene Signal Amplitudenwerte zu aufeinanderfolgenden Zeitpunkten umfasst und/oder wobei das Verfahren den Schritt Ermitteln von in dem ersten Signal enthaltene Frequenzen umfasst.

4. Verfahren nach einem der vorhergehenden Ansprüche, wobei der Schritt des Zuordnens des empfangenen ersten Signals zu Elementen (20) der Fördervorrichtung (12) unter Berücksichtigung des empfangenen zweiten Signals ein Berücksichtigen einer Fördergeschwindigkeit der Fördervorrichtung (12), einer Länge der Fördervorrichtung (12) entlang der Förderrichtung (22) und/oder einer Anzahl an Elementen der Fördervorrichtung umfasst.

5. Verfahren nach einem der vorhergehenden Ansprüche, wobei das Verfahren den Schritt Überprüfen des empfangenen ersten Signals unter Berücksichtigung des empfangenen zweiten Signals und Verwerfen des empfangenen ersten Signals umfasst, für den Fall, dass das empfangene erste Signal in der Zeitachse nicht regelmäßig ist.

6. Verfahren nach einem der vorhergehenden Ansprüche, wobei das Überwachen der Fördervorrichtung (12) ein Vergleichen eines Amplitudenwertes in einem Frequenzband mit einem Grenzwert umfasst und/oder wobei das Verfahren den Schritt Generieren einer Warnung und/oder eines Alarmes beim Überschreiten des Grenzwertes in einem spezifischen Frequenzband und/oder beim Überschreiten des Grenzwertes in mehreren Frequenzbändern umfasst.

7. Verfahren nach einem der vorhergehenden Ansprüche, wobei das Überwachen der Fördervorrichtung (12) ein Vergleichen eines Amplitudenwertes mit einem Grenzwert über mehrere Umläufe der Fördervorrichtung (12) umfasst, und/oder wobei das Überwachen der Fördervorrichtung (12) derart erfolgt, dass zugeordnete erste Signale, die auf irreguläre Elemente (20) der Fördervorrichtung (12) zurückzuführen sind, von zugeordneten ersten Signalen, die auf irregulär auf der Fördervorrichtung angeordnete Stückgüter (26) und/oder die auf von der Norm abweichende Stückgüter (26) zurückzuführen sind, voneinander unterscheidbar sind.

8. Vorrichtung (14) zur Datenverarbeitung umfassend Mittel zur Ausführung des Verfahrens nach einem der vorherigen Verfahrensansprüche.

9. Computerprogrammprodukt, umfassend Befehle, die bei der Ausführung des Programms durch einen Computer diesen veranlassen, das Verfahren nach einem der vorherigen Verfahrensansprüche auszuführen.

10. Computerlesbarer Datenträger, auf dem das Computerprogrammprodukt nach dem vorherigen Anspruch gespeichert ist.

11. System (10) umfassend eine Fördervorrichtung (12), eine nach Anspruch 8 ausgestaltete Vorrichtung (14) zur Datenverarbeitung, wenigstens ein Mikrophon (16) und wenigstens eine Lichtschranke (18),
wobei die Fördervorrichtung (12) mehrere Elemente (20) umfasst und derart ausgestaltet ist, dass die mehreren Elemente (20) entlang einer Förderrichtung (22) der Fördervorrichtung (12) bewegbar sind,
wobei das Mikrophon (16) dazu ausgestaltet ist, ein erstes Signal auf Grundlage von Schall zu erzeugen,
wobei die Lichtschranke (18) eine Lichtquelle und einen Lichtsensor umfasst und dazu ausgestaltet ist, ein zweites Signal auf Grundlage von optischen Signalen zu erzeugen, und
wobei das Mikrophon (16) und die Lichtschranke (18) kommunikativ mit der Vorrichtung (14) zur Datenverarbeitung in Verbindung stehen, derart dass das erste und zweite Signal von der Vorrichtung (14) zur Datenverarbeitung empfangbar sind.

12. System (10) nach dem vorhergehenden Systemanspruch, wobei die Fördervorrichtung (12) als Rundkurs ausgestaltet ist und/oder wobei die mehreren Elemente (20) synchron entlang der Förderrichtung (22) bewegbar sind und/oder wobei die Elemente (20) dazu ausgestaltet sind, auf den Elementen (20) angeordnete Objekt (26) senkrecht zur Förderrichtung (22) zu bewegen.

13. System (10) nach einem der vorhergehenden Systemansprüchen, wobei das Mikrophon (16) derart zur Fördervorrichtung (12) angeordnet ist, dass in einer Kurve der Fördervorrichtung (12) erzeugter Schall im Empfangsbereich des Mikrophons (16) ist und/oder wobei das Mikrophon (16) nicht mehr als 1 m von einer Kurve der Fördervorrichtung (12) entfernt angeordnet ist.

14. System (10) nach einem der vorhergehenden Systemansprüchen, wobei das Mikrophon (16) an einem statischen Bauteil (24) der Fördervorrichtung (12) und/oder unterhalb einer Unterseite der Elemente (20) der Fördervorrichtung (12) angebracht ist.

15. System (10) nach einem der vorhergehenden Systemansprüchen, wobei wenigstens ein Element (20) der Fördervorrichtung (12) mit einem Reflektor ausgestattet ist, und wobei bevorzugt die Lichtquelle der Lichtschranke (18) derart zur Fördervorrichtung (12) angeordnet ist, dass ein Lichtstrahl der Lichtquelle bei Durchlauf des Elementes (20) den Reflektor senkrecht trifft.
